# EUROPÄISCHE PATENTSCHRIFT

(11) **EP 1 577 131 B1**
(45) Veröffentlichungstag und Bekanntmachung des Hinweises auf die Patenterteilung: **27.12.2006**
(21) Anmeldenummer: 05004849.5
(22) Anmeldetag: 04.03.2005
(51) Int. Cl.: B60H 1/00

(54) **Strömungssteuereinrichtung zur Steuerung der Durchflussmenge eines fluiden Mediums durch einen Strömungskanal**
Flow controlling device for controlling the amount of a fluid flowing through a duct
Régulateur de flux servant à réguler le débit de fluide à travers un conduit

(30) Priorität: 18.03.2004 DE 102004013686
(43) Veröffentlichungstag der Anmeldung: 21.09.2005
(73) Patentinhaber: Behr GmbH & Co. KG, 70469 Stuttgart (DE)
(72) Erfinder: Wolf, Walter, Dipl.-Ing., 71570 Oppenweiler-Zell (DE)
(74) Vertreter: Grauel, Andreas

(56) Entgegenhaltungen:
- DE-A1- 2 307 439
- DE-A1- 2 317 661
- DE-A1- 19 832 337
- DE-C1- 4 436 942
- FR-A- 1 503 575
- GB-A- 2 395 257

## Beschreibung

Die Erfindung bezieht sich auf eine Strömungssteuereinrichtung zur Steuerung der Durchflussmenge eines fluiden Mediums durch einen Strömungskanal mit mindestens zwei um eine Zentralachse angeordneten Auslenkelementen, wobei die Auslenkelemente zwischen einer ersten, den Strömungskanal vollständig schließenden Stellung und einer zweiten, den Strömungskanal vollständig öffnenden Stellung verstellbar angeordnet sind.

Derartige Strömungssteuereinrichtungen werden beispielsweise in der Fahrzeugtechnik, insbesondere zur Steuerung eines in einer Klimaanlage eines Fahrzeugs geführten und zur Temperierung des Fahrzeugsinnenraums vorgesehenen Luftstroms verwendet. Mit Hilfe der Strömungssteuereinrichtung kann der Luftstrom bzw. die Durchflussmenge des Luftstromes durch Strömungskanäle oder Leitungen vollständig verschlossen oder geöffnet oder in eine beliebige Zwischenstellung gebracht werden. Das heißt, die Durchflussmenge kann auf Null gestellt werden oder der Strömungskanal wird maximal für den Luftstrom geöffnet, d. h., die Durchflussmenge des Luftstromes durch die Strömungskanal wird auf ein Maximum eingestellt.

Bekannte Strömungssteuereinrichtungen umfassen üblicherweise ein oder mehrere Auslenkelemente, die in Art von Flügeln als einfache Schwenkelemente gemeinsam steuerbar sind, wie aus der DE 2307439 bekannt ist. Diese Strömungssteuereinrichtungen werden auch als so genannte Schmetterlingsflügel-Auslenkelemente bezeichnet. Die flügelartigen und nur gemeinsam schwenkbaren Auslenkelemente erzeugen im Allgemeinen Wirbel. Darüber hinaus können sich Totwasserzonen in Fließrichtung hinter den verschwenkbaren Auslenkelementen bilden. Dies führt beispielsweise bei einer als Mischelement ausgebildeten Strömungssteuereinrichtung zu lokalen Konzentrationsunterschieden, die nur unzureichend ausgeglichen werden, da bedingt durch kleine Bauräume und Abmessungen keine großräumige Durchmischung im Strömungskanal stattfindet.

Der Erfindung liegt daher die Aufgabe zugrunde, eine Strömungssteuereinrichtung anzugeben, welche besonders einfach ausgeführt ist und eine homogene Verteilung, Dosierung, Mischung etc. ermöglicht.

Die Aufgabe wird erfindungsgemäß bei einer Strömungssteuereinrichtung der eingangs genannten Art mit den Merkmalen des unabhängigen Anspruchs 1 gelöst.

Die Erfindung geht von der Überlegung aus, dass eine Strömungssteuereinrichtung eine zugehörige Querschnittsfläche aufweist, die zur Steuerung der Durchflussmenge des Strömungsmediums entsprechend veränderbar ist. Hierzu sollte die Strömungssteuereinrichtung einen im Strömungskanal variierenden Strömungswiderstand aufweisen und strömungsausgangsseitig auftretende Totwasserzonen sicher vermeiden. Dies ist durch einen möglichst geringen Druckverlust der im Strömungskanal angeordneten Strömungssteuereinrichtung erzielbar. Das aber wiederum steht konträr zu der eigentlichen Funktion der Steuerung der Durchflussmenge durch die Strömungssteuereinrichtung, welche hierzu bedarfsweise einen höheren Widerstand (= Strömungswiderstand) und somit einen größeren Druckverlust aufweist. So wirken sich neben dem höheren Widerstand der Auslenkelemente oder Segmente der Strömungssteuereinrichtung selbst, ebenfalls die durch diese erzeugten Wirbel steigernd auf einen Druckverlust in Strömungsrichtung gesehen aus. Um dennoch beiden konträren Auslegungszielen gerecht zu werden, ist eine Strömungssteuereinrichtung mit einem möglichst die Strömungslinie unterstützenden Strömungswiderstand vorgesehen. Hierzu weist die Strömungssteuereinrichtung Auslenkungselemente auf, die gemeinsam um eine Zentralachse angeordnet und unabhängig voneinander bewegbar sind.

Die Normalebene der Zentralachse ist dabei gemäß der üblichen Definition diejenige Ebene, zu der die Zentralachse orthogonal ist. Falls das Strömungsmedium im Wesentlichen quer zur Zentralachse entlang einer Symmetrieachse des Strömungskanals geführt ist, überschneiden sich somit die Auslenkelemente auch bezüglich des Strömungsquerschnitts für das Strömungsmedium.

In einer bevorzugten Ausführungsform sind die Auslenkelemente relativ zueinander symmetrisch und/oder asymmetrisch bewegbar. Beispielsweise sind die Auslenkelemente, z. B. Klappen oder Flügel, symmetrisch, d. h. gemeinsam mit gleich bleibendem Öffnungswinkel zueinander um die Zentralachse bewegbar angeordnet. Alternativ können die Auslenkelemente getrennt voneinander in eine beliebige Stellung mit einem beliebig einstellbaren Öffnungswinkel zueinander bewegbar angeordnet sein. Bevorzugt sind die Auslenkelemente rotationssymmetrisch und/oder drehbar um die Zentralachse herum angeordnet. Dies ermöglicht eine besonders kompakte und Bauraum sparende Ausführung der Strömungssteuereinrichtung. Bedingt durch eine derartig kompakte und Platz sparende Ausführung ist auch das Gewicht entsprechend gering, so dass sich eine derart ausgebildete Strömungssteuereinrichtung für den Einsatz in einem Luftführungskanal einer Klimaanlage im Fahrzeug besonders eignet.

Für eine möglichst variable und freie Einstellung der Auslenkelemente ist dem jeweiligen Auslenkelement ein eigenes Gelenk zugeordnet. Für eine möglichst einfache und kompakte Ausführung weist eines der Auslenkelemente als Gelenk ein geschlossenes Profilelement, insbesondere einen Hohl- oder Vollzylinder, auf. Alternativ weist das andere Auslenkelement als Gelenk ein offenes Profilelement, insbesondere eine Halbschale oder einen Halbzylinder, auf. Um eine gleichzeitige gegenseitige Steuerung der Auslenkelemente bei möglichst geringem Bauplatzbedarf zu ermöglichen, umschließt das als offenes Profilelement ausgebildete Gelenk das als geschlossenes Profilelement ausgebildete Gelenk zumindest teilweise. Mit anderen Worten: Die Gelenke der Auslenkelemente sind ineinander greifend angeordnet. Das heißt, bei zwei Auslenkelementen bildet ein Auslenkelement sein Gelenk als Hohl- oder Vollzylinder oder Polygonprofil, das andere Auslenkelement bildet sein Gelenk durch ein nicht geschlossenes Profilelement, z. B. ein halboffenes Profilelement wie eine Halbschale oder einen Halbzylinder. Dabei umschließt die Wand des halb offenen Profilelements das geschlossene Profilelement mit einem Winkel von größer 180°, so dass eine Führungswirkung gegeben ist und beide Auslenkelemente, z. B. Klappen oder Flügel, unabhängig voneinander bewegt werden können. Der Antrieb kann hierzu auf derselben Seite oder auf der gegenüberliegenden Seite erfolgen.

Gemäß einer weiteren Ausführungsform weisen beide Auslenkelemente als Gelenk ein geschlossenes Profilelement, bevorzugt einen Hohl- oder Vollzylinder, auf. Besonders bevorzugt sind die geschlossenen Profilelemente axial zueinander versetzt angeordnet.

In einer möglichen Ausführungsform entspricht der Verlauf der beiden Gelenke dem Verlauf der gemeinsamen, quer zur Fließrichtung verlaufenden Zentralachse. Diese Anordnung ermöglicht einen einfachen Aufbau der Strömungssteuereinrichtung und insbesondere eine einfache Montage bzw. Demontage dieser im Strömungskanal.

Vorzugsweise ist das jeweilige Gelenk durch einen Kniehebel, der ggf. auch Antrieb wird, oder durch ein Filmscharnier gebildet. Beispielsweise bewegen sich dabei zwei Auslenkelemente wie zwei Klappen um eine starre Achse. Alternativ sind die zwei Auslenkelemente mit einem oder mehreren Filmscharnieren verbunden und bewegen sich um die starre Achse oder in einer Führung, z. B. einer Führungsnut in der Wand des Strömungskanals. Durch Anordnung der jeweiligen radialen Enden der Auslenkelemente in der Führung des Strömungskanals ist eine möglichst genaue und sichere Einstellung des Strömungswiderstands gegeben. Alternativ kann die Strömungssteuereinrichtung anstelle der Auslenkelemente einen mit einer Folie umspannten Rahmen oder einen Flach- oder Zahnriemen umfassen.

In einer weiteren Ausführungsform der Strömungssteuereinrichtung sind beide Auslenkelemente in Fließrichtung des fluiden Mediums gesehen mit einem variablen Öffnungswinkel α von 0° bis 180° zueinander anordbar. Insbesondere sind beide Auslenkelemente in Fließrichtung des fluiden Mediums mit einem Öffnungswinkel von 0° zueinander und in ihrer Projektion auf die Normalebene überlappend vor oder hinter der Zentralachse zur Erzielung einer den Strömungskanal vollständig öffnenden Stellung anordbar. Eine derartige übereinander liegende Anordnung der Auslenkelemente reduziert oder verhindert gar strömungsausgangsseitig das Auftreten von Totwasserzonen und die daraus resultierenden Wirbel oder Geräusche hinter den Auslenkelementen. Alternativ sind die Auslenkelemente in der ersten, den Strömungskanal möglichst vollständig schließenden Stellung nahezu senkrecht zur Fließrichtung zueinander mit einem Öffnungswinkel α von 110° bis 180°, bevorzugt 150° bis 180° angeordnet. Dabei entspricht der Verlauf der Zentralachse dem Verlauf einer der Symmetrieachsen des Strömungskanals. Je nach Antriebsart kann dabei der maximal mögliche Öffnungswinkel begrenzt werden, z. B. auf einen maximalen Öffnungswinkel von 170°.

Gemäß einer Ausführungsform weisen die Auslenkelemente Führungselemente auf, die insbesondere an den jeweiligen radialen Enden der Auslenkelemente angeordnet sind. Vorteilhafterweise sind die Führungselemente in einer Führung des Strömungskanals angeordnet, wodurch unter Umständen eine stabilere Lagerung der Auslenkelemente erreichbar ist.

Je nach Art und Aufbau sowie Anordnung der Strömungssteuereinrichtung im Strömungskanal sowie Stellung der Auslenkelemente können in Fließrichtung vor der Strömungssteuereinrichtung ein Mehrkammerkanal und in Fließrichtung hinter der Strömungssteuereinrichtung ein Einkammerkanal gebildet sein oder umgekehrt.

Ausführungsbeispiele der Erfindung werden anhand einer Zeichnung näher erläutert. Darin zeigen:
- Fig. 1: schematisch einen Längsschnitt eines Strömungskanals mit einer Strömungssteuereinrichtung gemäß dem Stand der Technik zur Steuerung der Durchflussmenge eines fluiden Mediums;
- Fig. 2: schematisch einen Längsschnitt eines Strömungskanals mit einer Strömungssteuereinrichtung gemäß der vorliegenden Erfindung zur Steuerung der Durchflussmenge eines fluiden Mediums;
- Fig. 3A bis 3E: schematisch eine Explosionsdarstellung, eine perspektivische Ansicht und einen Längsschnitt einer alternativen Strömungssteuereinrichtung mit einem als Scharnier ausgebildeten Gelenk;
- Fig. 4A bis 4C: schematisch im Schnitt einen Strömungskanal mit einer Strömungssteuereinrichtung, deren Auslenkelemente in einer Führung des Strömungskanals geführt sind;
- Fig. 5A bis 5C: schematisch im Schnitt einen Strömungskanal mit einer Strömungssteuereinrichtung, deren Auslenkelemente in mehreren Führungen des Strömungskanals geführt sind;
- Fig. 6A bis 6C: schematisch im Schnitt einen Strömungskanal mit einer Strömungssteuereinrichtung, deren Auslenkelemente in einer gewölbten Führung des Strömungskanals geführt sind;
- Fig. 7A bis 7E: schematisch im Schnitt einen Strömungskanal mit einer weiteren Ausführungsform für eine Strömungssteuereinrichtung mit einem Kniehebelgelenk;
- Fig. 8A bis 8E: schematisch im Schnitt verschiedene Ausführungsformen für ein Filmscharnier, und
- Fig. 9A bis 19D: schematisch im Querschnitt alternative Ausführungsformen für eine Strömungssteuereinrichtung mit einer oder mehreren Führungen für einen Einkammerkanal oder einen Mehrkammerkanal.

Einander entsprechende Teile sind in allen Figuren mit den gleichen Bezugszeichen versehen.

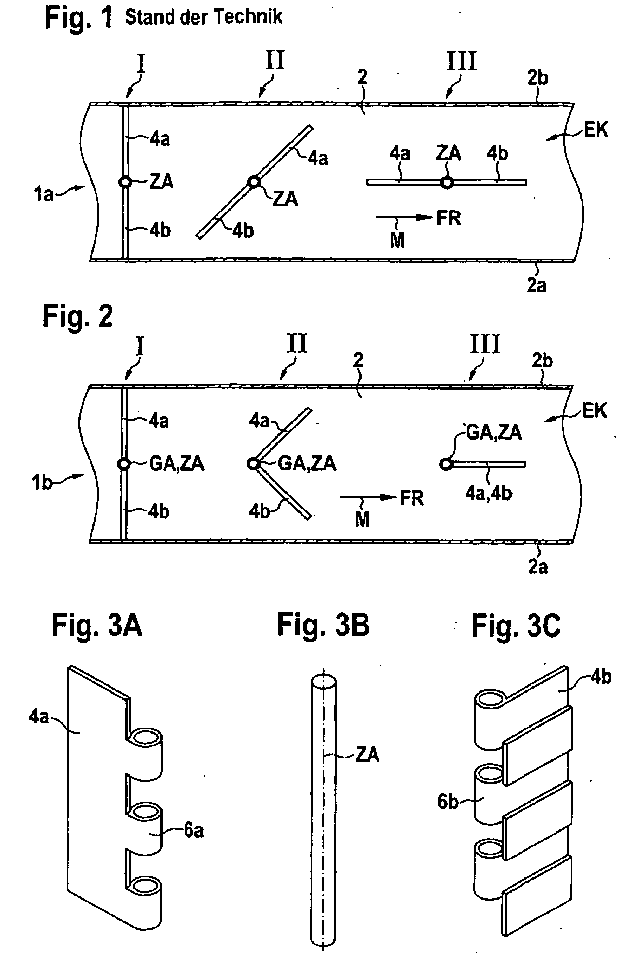

In Fig. 1 ist eine Strömungssteuereinrichtung 1a zur Steuerung der Durchflussmenge eines fluiden Mediums M durch einen Strömungskanal 2 gemäß dem Stand der Technik gezeigt. Die vorliegende Strömungssteuereinrichtung 1 a ist beispielsweise in einem Fahrzeug eingebaut und regelt einen von einer nicht dargestellten Klimaanlage in den Fahrzeuginnenraum geleiteten Luftstrom.

Das fluide Medium M, vorliegend Luft, wird entlang einer Fließrichtung FR durch den Strömungskanal 2 geführt. Die Strömungssteuereinrichtung 1 a umfasst eine Dreh- oder Zentralachse ZA, um die zwei Auslenkelemente 4a und 4b gemeinsam schwenkbar sind. Je nach Art und Ausführung des Strömungskanals 2 kann dieser im Querschnitt vieleckig, insbesondere quadratisch oder kreisförmig, ausgebildet sein. Die Zentralachse ZA in Fig. 1 verläuft senkrecht zu der Fließrichtung FR und ist mittig zwischen einer in Fig. 1 oberen Wand 2a und einer unteren Wand 2b des Strömungskanals 2 angeordnet. Auf diese Weise verläuft die Zentralachse ZA entlang einer Symmetrieachse des Strömungskanals 2, wenn der Strömungskanal 2 im Querschnitt senkrecht zur Fließrichtung FR betrachtet wird.

Die Auslenkelemente 4a, 4b sind mittig zwischen der oberen Wand 2a und der unteren Wand 2b angeordnet; sie weisen jeweils eine Oberfläche auf, die im Wesentlichen der halben Querschnittsfläche des Strömungskanals 2 entspricht, wenn der Strömungskanal 2 im Querschnitt senkrecht zur Fließrichtung FR betrachtet wird.

In der Fig. 1 sind drei Öffnungs- bzw. Schließzustände durch entsprechende Stellungen I bis III der Strömungssteuereinrichtung 1 a gezeigt:

In der Stellung I verschließt die Strömungssteuereinrichtung 1a den Strömungskanal 2 vollständig. Die Auslenkelemente 4a und 4b sind senkrecht zu der Fließrichtung FR angeordnet. In der Stellung II verschließt die Strömungssteuereinrichtung 1a den Strömungskanal 2 nur teilweise. Die Auslenkelemente 4a und 4b weisen einen Stellungswinkel von ca. 45° zu der Fließrichtung FR auf, so dass der Strömungskanal 2 zur Hälfte geöffnet ist. In der Stellung III öffnet die Strömungssteuereinrichtung 1a den Strömungskanal 2 vollständig, d. h. es kann die maximale Durchflussmenge des fluiden Mediums M durch den Strömungskanal 2 fließen. Die Auslenkelemente 4a und 4b sind parallel zur Fließrichtung FR angeordnet.

Im Stand der Technik sind die Auslenkelemente 4a und 4b starr miteinander verbunden, so dass bei einer Schwenkung des Auslenkelements 4a um die Zentralachse ZA auch das andere Auslenkelement 4b verschwenkt wird. Werden die Auslenkelemente 4a, 4b verschwenkt, so ist das Auslenkelement 4a in Fließrichtung FR beispielsweise vor der Zentralachse ZA und das Auslenkelement 4b in Fließrichtung FR dann hinter der Zentralachse ZA positioniert.

Eine erfindungsgemäße Strömungssteuereinrichtung 1b ist in Fig. 2 dargestellt. Die Strömungssteuereinrichtung 1b weist mindestens zwei um eine Gelenkachse GA angeordnete Auslenkelemente 4a und 4b auf, die getrennt voneinander um die Zentralachse ZA bewegbar sind. Je nach Art und Ausbildung einer zugehörigen Antriebseinheit können die Auslenkelemente 4a und 4b gekoppelt ansteuerbar sein oder getrennt voneinander ansteuerbar sein. Die Auslenkelemente 4a sind beispielsweise flächige Elemente, wie Klappen oder Flügel, wobei jedes Element, jede Klappe oder jeder Flügel eine andere Form und/oder eine andere Abmessung aufweisen kann. Die Auslenkelemente 4a, 4b können auch durch Rahmen gebildet sein, die von einer Folie umspannt sind.

Wie in Fig. 1 sind auch in Fig. 2 drei verschiedene Stellungen I bis III der Strömungssteuereinrichtung 1b gezeigt. Die Strömungssteuereinrichtung 1b, insbesondere deren Auslenkelemente 4a, 4b, sind dabei zwischen einer ersten, den Strömungskanal 2 vollständig verschließenden Stellung I und einer zweiten, den Strömungskanal 2 vollständig öffnenden Stellung III verstellbar angeordnet. Die Auslenkelemente 4a, 4b können dazwischen eine beliebige weitere Stellung II einnehmen.

Ein weiterer Unterschied zu der Strömungssteuereinrichtung 1a in Fig. 1 gemäß dem Stand der Technik ist der, dass beide Auslenkelemente 4a und 4b der Strömungssteuereinrichtung 1b bei geöffnetem Strömungskanal 2 in der Stellung III in Fließrichtung FR hinter der Zentralachse ZA der Strömungssteuereinrichtung 1b angeordnet, insbesondere in einer übereinander liegenden oder einer vollständig einander überlappenden Stellung gebracht sind. Die Auslenkelemente 4a und 4b können alternativ in einer Variante dieser Ausführungsform bei geöffnetem Strömungskanal 2 in Fließrichtung FR auch vor der Zentralachse ZA der Strömungssteuereinrichtung 1b übereinander gestellt sein. Zur Erzielung einer Leitwirkung kann die geöffnete Stellung auch schräg zur Ausströmung liegen.

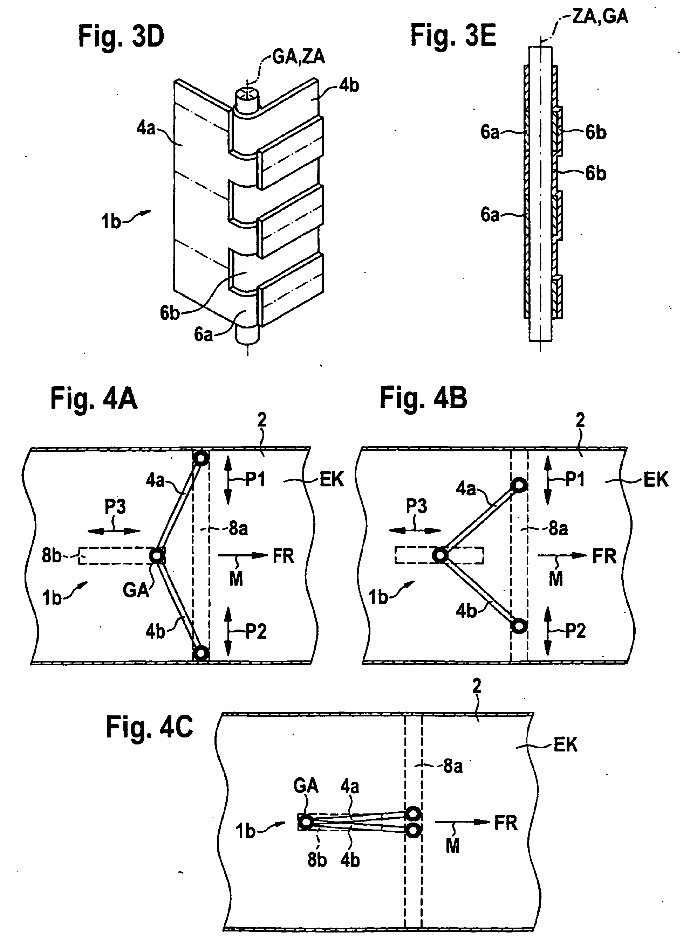

Fig. 3A bis 3E zeigen eine erste mögliche Ausführungsform für die Ausbildung der Gelenkachse GA der Strömungssteuereinrichtung 1b mit einer unabhängigen Steuerung für die einzelnen Auslenkelemente 4a, 4b. Fig. 3A bis 3C zeigen in Explosionsdarstellung eine Strömungssteuereinrichtung 1b mit Klappenprinzip, wobei die als Klappen ausgebildeten Auslenkelemente 4a, 4b in der Fig. 3D in 90°-Stellung zueinander gebracht sind. Fig. 3E zeigt einen Schnitt durch die Zentralachse ZA.

Die Auslenkelemente 4a, 4b sind relativ zueinander symmetrisch, insbesondere rotationssymmetrisch, um eine gemeinsame Achse - die Zentralachse ZA - getrennt voneinander mit einem Öffnungswinkel von 0° bis 270° bewegbar. Die Zentralachse ZA und die Gelenkachse GA sind hier identisch und bilden die Längsachse der Strömungssteuereinrichtung 1b.

Beispielsweise ist die Gelenkachse GA wie in Fig. 3D gezeigt als ein Scharnier ausgebildet. Dabei ist dem jeweiligen Auslenkelement 4a, 4b ein Gelenk 6a, 6b zugeordnet. In diesem Ausführungsbeispiel weisen beide Auslenkelemente 4a und 4b ein geschlossenes Profilelement als Gelenk 6a bzw. 6b auf, wie es im Längsschnitt gemäß Fig. 3E und in der perspektivischen Darstellung nach Fig. 3D dargestellt ist. Dazu greifen die Gelenke 6a und 6b an der Zentralachse ZA, welche z. B. als Welle ausgeführt ist, zahnartig ineinander. Auf diese Weise ist jedes Auslenkelement 4a, 4b unabhängig voneinander in jede Richtung um die Zentralachse ZA schwenkbar.

Die Auslenkelemente 4a und 4b sind jeweils einteilig ausgeführt, so dass bei einer Anordnung der Strömungssteuereinrichtung 1b als Strömungskanal 2 ein Einkammerkanal EK gebildet ist. Durch Veränderung der Stellung eines der Auslenkelemente 4a oder 4b oder beider wird die Durchflussmenge des fluiden Mediums M durch den Strömungskanal 2 gesteuert. Für eine Veränderung der Stellung des jeweiligen Auslenkelements 4a oder 4b weisen diese jeweils einen zugehörigen, nicht näher dargestellten Antrieb auf, der beispielsweise am jeweiligen Flügel- oder Klappenende des Auslenkelements 4a oder 4b angeordnet ist.

Alternativ kann das jeweilige Auslenkelement 4a oder 4b mehrteilig ausgeführt sein, wie dies durch die gestrichelte Darstellung in Fig. 3D angedeutet ist. Eine solche Ausführung der Auslenkelemente 4a und 4b, welche selbst separat, aber auch deren Teilelemente separat ansteuerbar sind, ermöglicht eine einfache Ausführung einer Strömungssteuereinrichtung 1b für einen als Mehrkammerkanal MK ausgebildeten Strömungskanal 2. Dabei kann jedes Teilelement einen zugehörigen Antrieb für eine separate Verstellung aufweisen, es können aber auch mehrere Teilelemente über einen Antrieb gekoppelt sein.

Fig. 4A bis 4C zeigen eine alternative Ausführungsform für eine Gelenkachse GA einer Strömungssteuereinrichtung 1b. Dabei ist die Gelenkachse GA als ein Kniehebel ausgeführt. Die Enden des jeweiligen Auslenkelements 4a und 4b sind in einer Führung 8 des Strömungskanals 2 für eine einfache und sichere Bewegung der Auslenkelemente 4a bzw. 4b in einer der Stellungen I bis III bewegbar angeordnet. Dabei können die Auslenkelemente 4a und 4b symmetrisch oder asymmetrisch, gemeinsam oder separat in der Führung 8 entlang der Pfeile P1 und P2 bewegt werden, wodurch sich auch eine Bewegung der Strömungssteuereinrichtung 1b, insbesondere der Gelenkachse GA in einer weiteren Führung 8 entlang des Pfeils P3 ergibt. Die Führung 8a ist in nicht näher dargestellter Weise beispielsweise als eine die Wand 2a, 2b des Strömungskanals 2 teilweise oder vollständig umlaufende Führungsnut ausgeführt.

Je nach Art und Ausführung der Strömungssteuereinrichtung 1b kann der Antrieb zum Verstellen der Auslenkelemente 4a, 4b für eine Steuerung der Durchflussmenge durch den Strömungskanal 2 zum einen am jeweiligen Flügel- oder Klappenende des Auslenkelements 4a bzw. 4b und/oder zum anderen an der als eine bewegliche Achse ausgebildeten Gelenkachse GA angeordnet sein. Bei Verzicht auf eine Führung 8b im Strömungskanal 2 ist die Zentralachse ZA als eine starre Achse ausgeführt, so dass die Auslenkelemente 4a und 4b mit ihren Gelenken 6a bzw. 6b um die Gelenkachse GA separat bewegt werden können. In diesem Ausführungsbeispiel ist der Antrieb an der Gelenkachse GA, insbesondere am jeweiligen Gelenk 6a und/oder 6b oder am Klappenende der Auslenkelemente 4a bzw. 4b, angeordnet. Alternativ kann die virtuelle Achse oder Zentralachse ZA in einer Steuernut - der Führung 8b - geführt sein und somit beweglich ausgebildet sein. Als Antrieb wird beispielsweise ein Koppelgetriebe oder ein Schrittmotor verwendet.

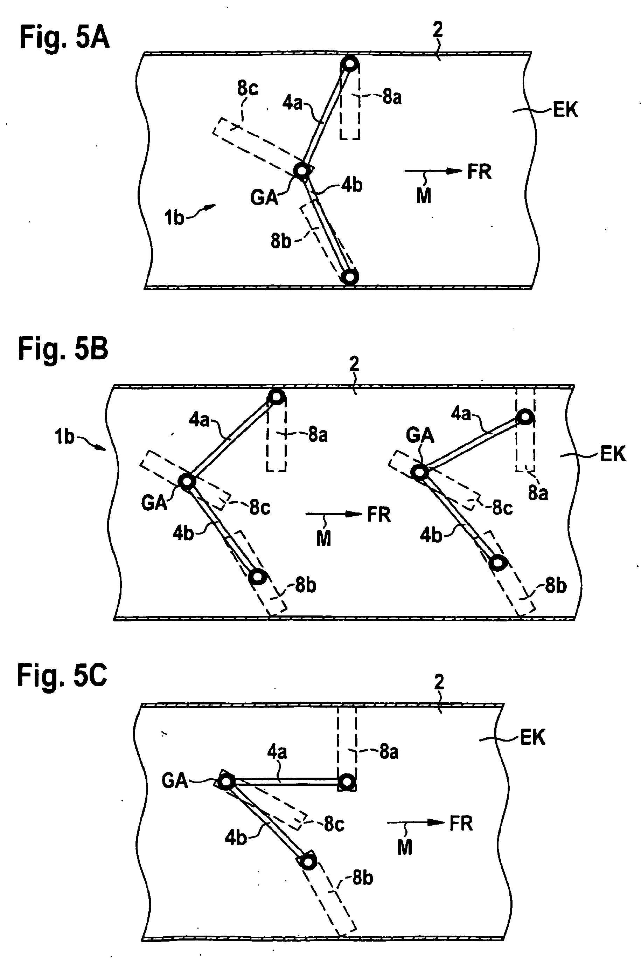

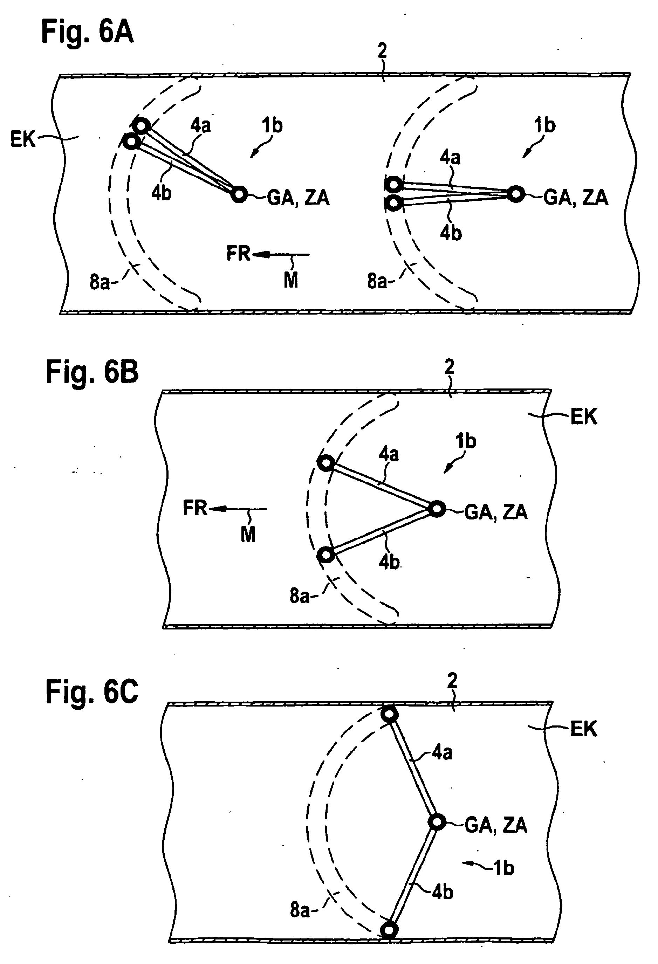

Figuren 5A bis 5C zeigen eine weitere Ausführungsform für eine Strömungssteuereinrichtung 1b; dabei ist jedes Auslenkelement 4a und 4b in einer zugehörigen Führung 8a bzw. 8b geführt. Die Zentralachse ZA ist ebenfalls beweglich ausgebildet und in einer zugehörigen Führung 8c oder Nut geführt. Die Steuerung der Position der Klappen oder Auslenkelemente 4a, 4b erfolgt somit über die Führungen 8a bis 8c. Figuren 6A bis 6C zeigen eine weitere Ausführungsform einer Strömungssteuereinrichtung 1b mit einer festen oder statischen Zentralachse ZA und zwei in einer Führung 8a separat bewegbaren Auslenkelementen 4a, 4b. Die Führung 8a ist hier bogenförmig ausgeführt, die Steuerung der Stellung der Auslenkelemente 4a, 4b erfolgt somit über eine Kreiskurve.

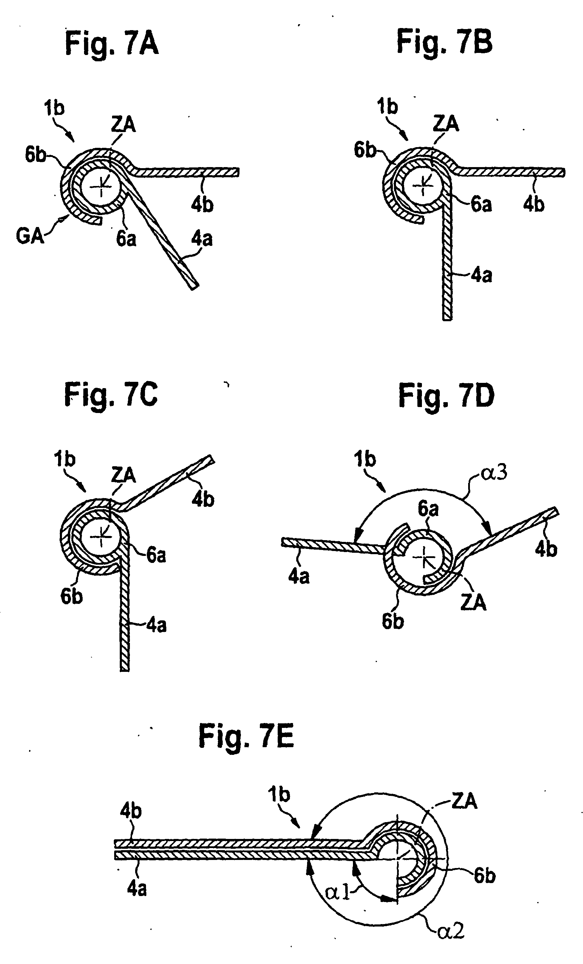

In den Fig. 7A bis 7E ist eine mögliche Ausführungsform für eine als Kniehebel ausgebildete Gelenkachse GA dargestellt. In diesem Beispiel weisen eines oder beide Auslenkelemente 4a, 4b als Gelenk 6a, 6b jeweils ein offenes Profilelement, z. B. eine Halbschale oder einen Halbzylinder, auf. Die Auslenkelemente 4a und 4b sind separat steuerbar. Das heißt, das Auslenkelement 4a ist beispielsweise in einer beliebigen Position mit einem zugehörigen Öffnungswinkel α1 zwischen 0° und 360°, insbesondere zwischen 0° und 180° oder 0° und 90°, stellbar. Das andere Auslenkelement 4b ist ebenfalls mit einem zugehörigen Öffnungswinkel α2 zwischen 0° und 360°, insbesondere zwischen 0° und 180° oder 0° und 90°, einstellbar. Figuren 7A und 7C zeigen die Strömungssteuereinrichtung 1b mit in Grenzstellung befindlichen Auslenkelementen 4a, 4b und Fig. 7B mit einer Zwischenstellung der Auslenkelemente 4a, 4b.

Fig. 7D zeigt eine mögliche Positionierung zweier Auslenkelemente 4a und 4b mit einem Öffnungswinkel α3 zueinander von ca. 170°, indem das Auslenkelement 4a einen Öffnungswinkel α1 von 0° und das Auslenkelement 4b einen Öffnungswinkel α2 von ca. 170° aufweist, so dass der Strömungskanal 2 beispielsweise vollständig geschlossen ist. In der in Fig. 7E dargestellten Positionierung der Auslenkelemente 4a und 4b ist der Öffnungswinkel 0°, so daß der Strömungskanal 2 beispielsweise nahezu vollständig geöffnet ist.

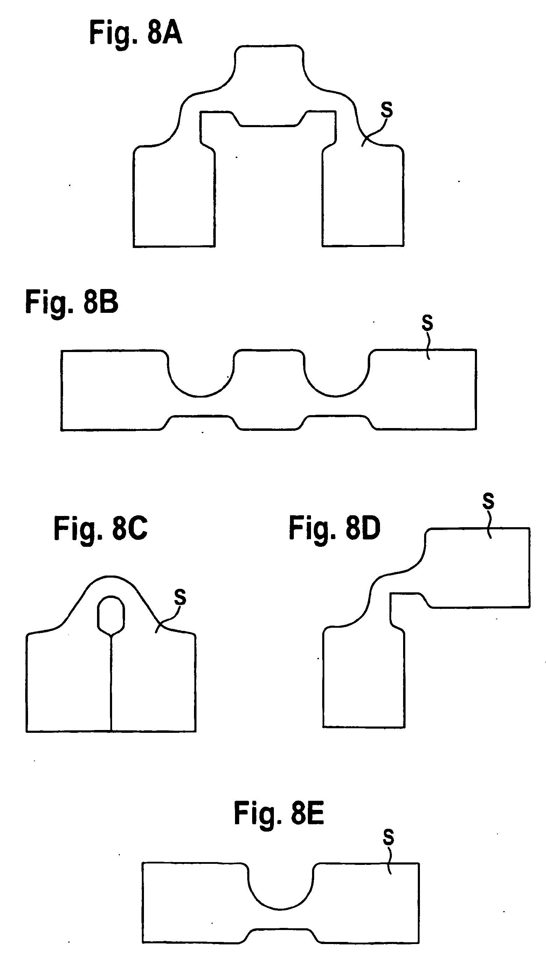

Die Fig. 8A bis 8E zeigen verschiedene Ausführungsformen für ein Scharnier S für die Auslenkelemente 4a, 4b. Fig. 8A zeigt ein Scharnier S in Stellung "AUF", Fig. 8B zeigt ein als Doppelfilmscharnier ausgebildetes Scharnier S in Spritzstellung, Fig. 8C zeigt ein Scharnier S in Stellung "AUF", Fig. 8D zeigt ein Scharnier S in 90°-Stellung und Fig. 8D zeigt ein als Filmscharnier ausgebildetes Scharnier S in Spritzstellung eines Spritzgußwerkzeugs.

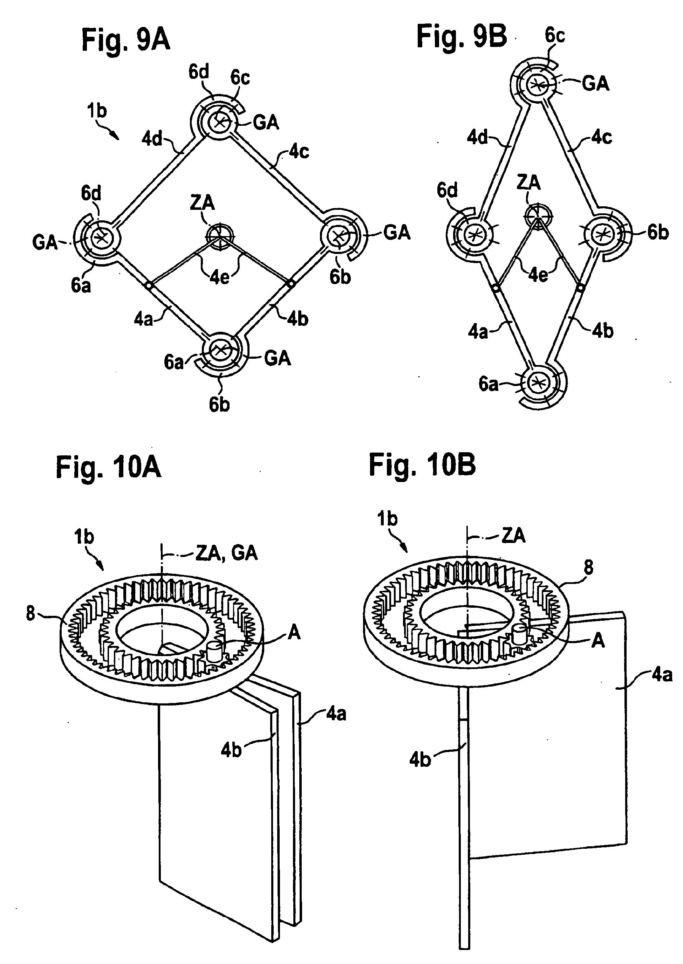

Die Fig. 9A, 9B zeigen eine weitere alternative Ausführungsform für eine Strömungssteuereinrichtung 1b, welche aus einer Gelenkkette mit mehreren Auslenkelementen 4a bis 4d und deren zugehörigen Gelenken 6a bis 6d um eine Zentralachse ZA symmetrisch bewegbar sind. In dieser Ausführungsform fallen die Zentralachse ZA und die Gelenkachse GA auseinander. Das heißt, jedes Auslenkelement 4a bis 4d ist um seine zugehörigen Gelenkachsen GA bewegbar angeordnet, wobei alle Auslenkelemente 4a bis 4d gemeinsam um die Zentralachse ZA zur Steuerung der Durchflussmenge des Mediums M durch den Strömungskanal 2 bewegbar sind. Die Auslenkelemente 4a bis 4d werden dabei über ein mittels eines Antriebs steuerbares weiteres Auslenkelement 4e, welches um die Zentralachse bewegbar ist, bewegt. Die Gelenkachse GA ist jeweils als ein Kniehebel ausgeführt. Hierbei weist jedes Auslenkelement 4a bis 4d als Gelenk 6a bis 6d eine Pfanne und einen Hebel auf. D. h., das eine Gelenk 6a des Auslenkelements 4a ist als ein geschlossenes Profilelement, z. B. als ein Hohl- oder Vollzylinder, ausgeführt, so dass das Gelenk 6a als Hebel fungiert. Korrespondierend dazu ist das Gelenk 6b als ein offenes, insbesondere als ein halboffenes Profilelement, z. B. als ein Halbzylinder, ausgeführt, so dass das Gelenk 6b des Auslenkelements 6b als Pfanne fungiert. Im funktionsfähigen Zustand der Strömungssteuereinrichtung 1b ist das Gelenk 6a des Auslenkelements 4a in der Pfanne oder dem Gelenk 6b des Auslenkelements 4b angeordnet, wodurch ein Kniehebelgelenk gebildet ist. Auf diese Weise sind die beiden Auslenkelemente 4a und 4b wiederum um eine gemeinsame Achse, die Zentralachse ZA, in verschiedenen Stellungen schwenkbar, wie aus den Fig. 9A bis 9B ersichtlich ist.

Je nach Art und Ausführung der Strömungssteuereinrichtung 1b kann sowohl am Gelenk 6a als auch am Gelenk 6b jeweils ein nicht dargestellter Motor oder ein Antrieb angeordnet sein, so dass die Auslenkelemente 4a und 4b unabhängig voneinander in jede Richtung um die Zentralachse ZA schwenkbar sind.

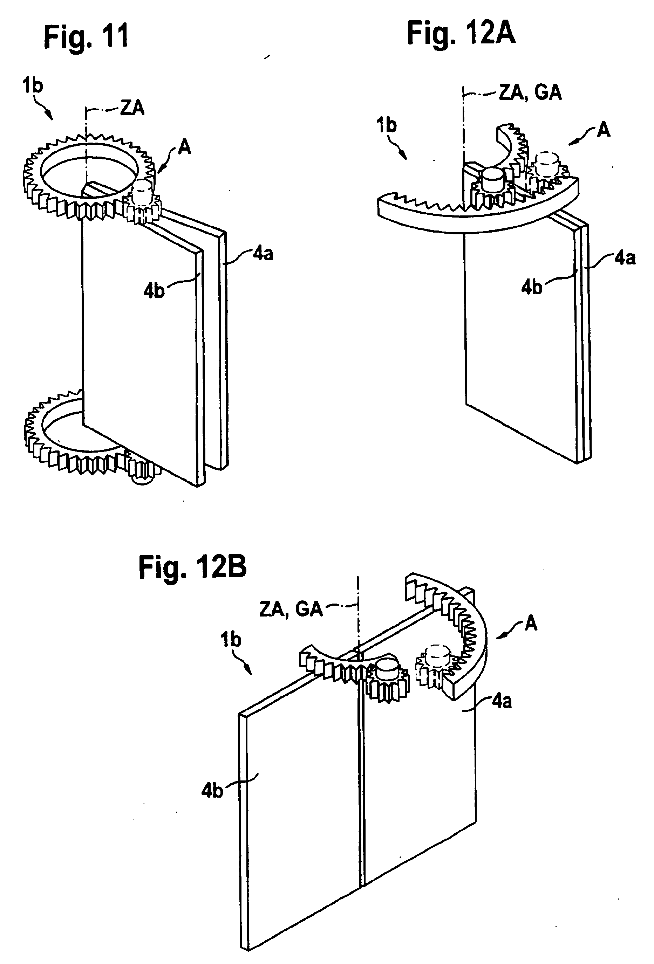

Fig. 10A bis 12B zeigen eine weitere Ausführungsform für eine Strömungssteuereinrichtung 1b. Dabei ist als Führung 8 eine als Zahnradantrieb ausgeführte Antriebsform A zur separaten Steuerung der Auslenkelemente 4a und 4b vorgesehen. Als Gelenk 6a bzw. 6b kann ein Kniehebelgelenk oder ein Scharnier vorgesehen sein. Bedingt durch die unterschiedliche Übersetzung der Zahnkränze bewegt sich das Auslenkelemente 4a ungleich zum Auslenkelement 4b, wie in den Figuren 10A bis 10B gezeigt. In Fig. 11 weisen die dem jeweiligen Auslenkelement 4a, 4b zugehörigen Zahnkränze die gleiche Übersetzung auf, so dass eine symmetrische Bewegung oder Verstellung der Auslenkelemente 4a, 4b separat oder gekoppelt ausgeführt werden kann. Fig. 12A bis 12B zeigen eine weitere Ausführungsform mit einer als Zahnradantrieb und Zahnsegment ausgeführten Antriebsform A.

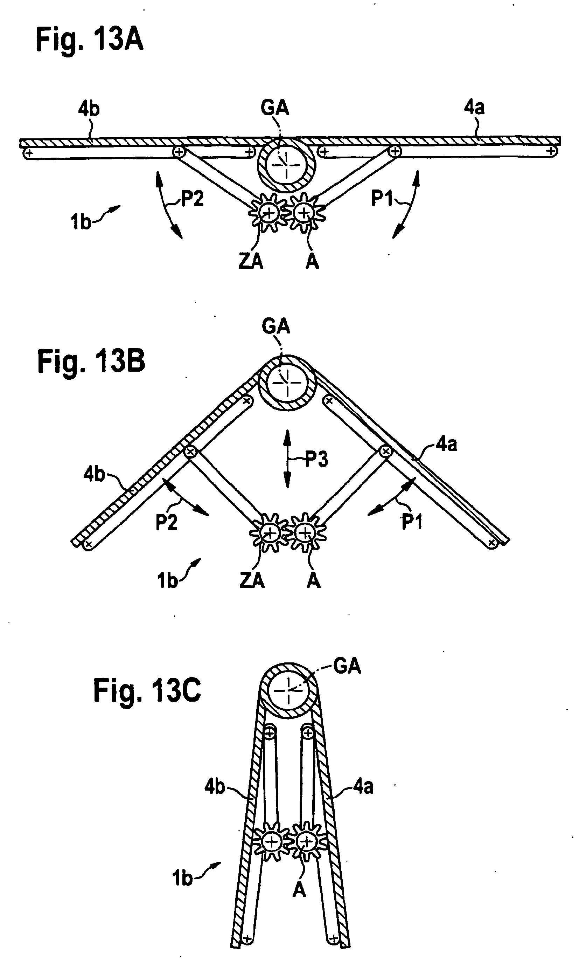

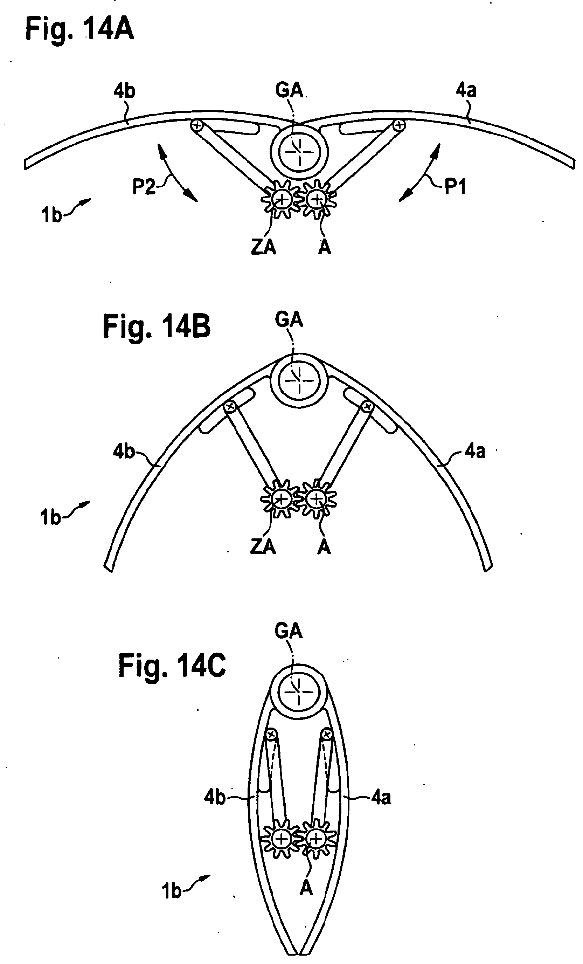

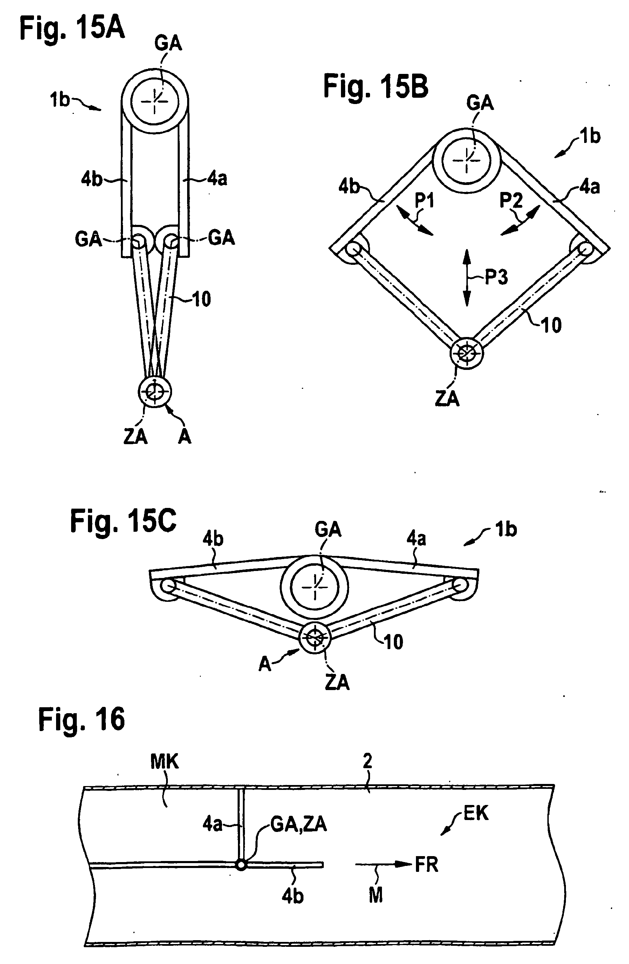

Fig. 13A bis 14C und 15A bis 15B zeigen verschiedene Antriebsformen A zur separaten Steuerung der Auslenkelemente 4a und 4b. Fig. 13A bis 13C sowie 14A bis 14C zeigen ebenfalls einen Zahnradantrieb. Fig. 14A bis 14C zeigen eine gewölbte Ausführungsform für die Auslenkelemente 4a und 4b, wodurch Totwasser-Zonen bei einer Stellung "AUF" verhindert werden. Fig. 15A bis 15C zeigen einen Kniehebelantrieb. In Fig. 15A bis 15C sind die Auslenkelemente 4a und 4b dazu beispielsweise durch ein Kniehebel 10 miteinander verbunden.

In den Ausführungsformen nach Fig. 13A bis 15B weisen die Auslenkelemente 4a und 4b keine real ausgebildete gemeinsame Zentralachse ZA auf. Vielmehr haben die Auslenkelemente 4a und 4b eine virtuelle Zentralachse ZA. Diese virtuelle Zentralachse ZA verschiebt sich beim Öffnen bzw. Schließen der Strömungssteuereinrichtung 1b z. B. durch Drehbewegung um die Gelenkachse GA gemäß der Pfeile P1 und P2 in und durch Bewegung des Antriebs A entgegen der Fließrichtung FR bzw. in Fließrichtung FR entlang des Pfeils P3.

Bei den in Fig. 13 und 14 dargestellten Ausführungsbeispielen werden bei Verstellung der Auslenkelemente (4a, 4b) die Zentralachse (ZA) und die Gelenkachse (GA) relativ zueinander bewegt. Dies bedeutet, daß entweder die Zentralachse (ZA) oder die Gelenkachse (GA) relativ zum Strömungskanal (2) fixiert sein können. Vorteilhaft ist unter Umständen eine fixierte Zentralachse (ZA), so daß ein Antrieb, wie beispielsweise ein Elektromotor, an dem Strömungskanal (2) fixierbar ist.

In Fig. 16 ist eine weitere Anwendung der Strömungssteuereinrichtung 1b gezeigt. Der Strömungskanal 2 ist in Fließrichtung FR vor der Strömungssteuereinrichtung 1b als Mehrkammerkanal MK gebildet und in Fließrichtung FR hinter der Strömungssteuereinrichtung 1b als Einkammerkanal EK. In einer der Kammem des Mehrkammerkanals MK, der durch das Auslenkelement 4a verschließbar ist, kann beispielsweise Warmluft geführt sein und in der anderen Kammer des Mehrkammerkanals MK, der durch das Auslenkelement 4b verschließbar ist, kann beispielsweise Kaltluft geführt sein.

Da bei der Strömungssteuereinrichtung 1 b die Auslenkelemente 4a und 4b getrennt voneinander bewegbar sind, kann die Strömungssteuereinrichtung 1b in dieser Ausführungsform auch dazu verwendet werden, mehrere der Strömungssteuereinrichtung 1b zugeführte Medien M für den strömungsausgangsseitig folgenden Einkammerkanal EK zu mischen. In der vorliegenden Ausführungsform kann die durch den Mehrkammerkanal MK der Strömungssteuereinrichtung 1b zugeführte Warmluft und Kaltluft durch die Auslenkelemente 4a und 4b in ein beliebiges Verhältnis von Warmluft zu Kaltluft gemischt und in den Einkammerkanal EK geleitet werden.

Somit dient die Strömungssteuereinrichtung 1b in dieser Ausführungsform nicht nur dem Öffnen bzw. Schließen des Einkammerkanals EK sondern auch zum Mischen der fluiden Medien, die der Strömungssteuereinrichtung 1b zugeführt werden.

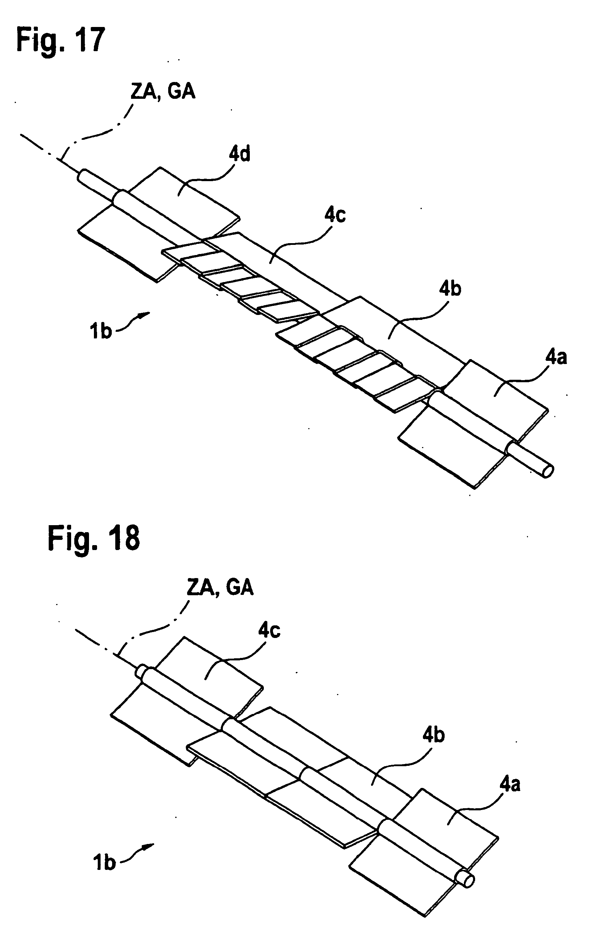

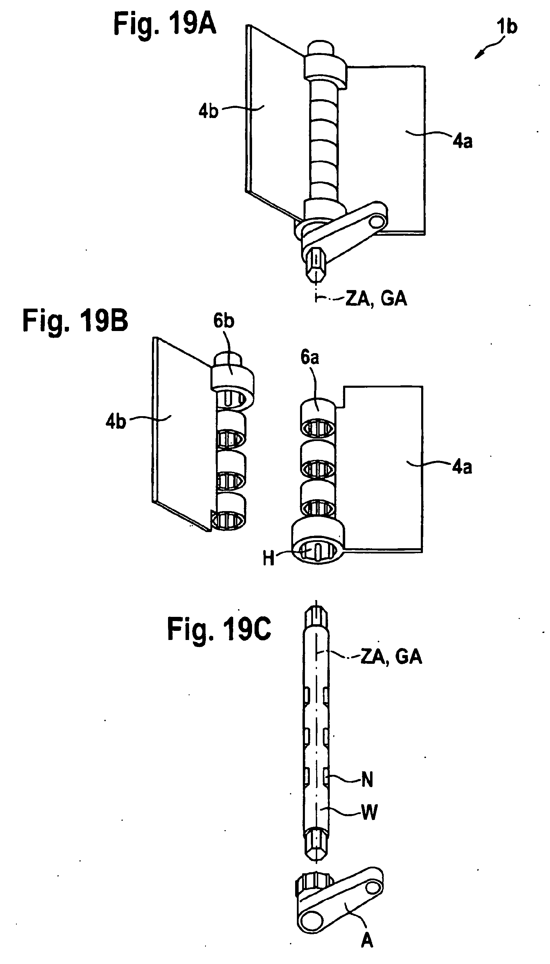

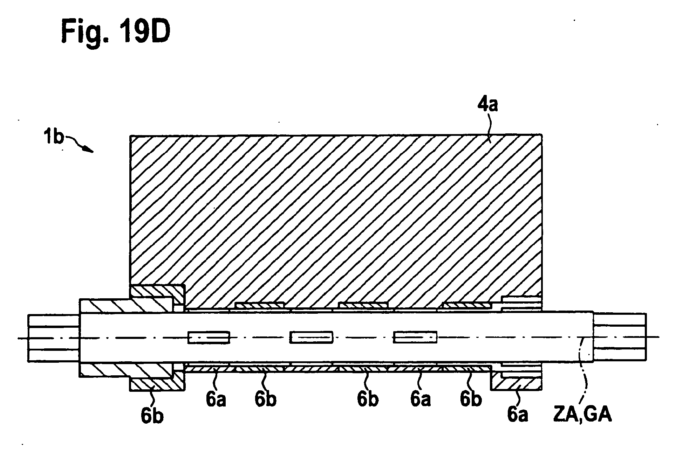

Die Fig. 17 und 18 zeigen jeweils eine Strömungssteuereinrichtung 1b mit mehreren Auslenkelementen 4a bis 4d, die eine gemeinsame Achse - die Zentralachse ZA - aufweisen. Wie in den Fig. 19A bis 19C gezeigt, kann eines der Auslenkelemente 4a über einen Hebel H und das andere Auslenkelement 4b über eine Welle W angetrieben werden. Wahlweise können die Antriebe auch auf gegenüberliegenden Seiten angeordnet sein. Die Auslenkelemente 4a, 4b können im Wesentlichen gleiche Abmessungen, Formen und Strukturen aufweisen. Alternativ können sie verschiedenartig ausgeführt sein. Die Nasen N auf der Welle W greifen in die Nuten des Auslenkelements 4b ein. Durch eine axial verschobene Position der Welle W im EinbauZustand kann eine Sperrwirkung wahlweise mit dem Auslenkelement 4a oder 4b oder mit beiden erzielt werden. Der Einbau in einem geschlossenen Kanal ist möglich, wenn die Welle W danach eingeschoben wird. Der Schwenk- oder Öffnungswinkel der Auslenkelemente 4a, 4b beträgt nahezu 360°. Fig. 19D zeigt einen Schnitt durch die Welle W.

Die Strömungssteuereinrichtung 1b weist zusammenfassend Auslenkelemente 4a und 4b auf, die getrennt voneinander bewegbar und ggf. auch ansteuerbar sind, d. h., das Auslenkelement 4a und das Auslenkelement 4b sind durch jeweils einen Motor bzw. durch einen gemeinsamen Motor bewegbar. Auf diese Weise ist die Stellung der Auslenkelemente 4a und 4b relativ zu der Fließrichtung FR einstellbar. Bei den in den Fig. 2 bis 19D gezeigten Ausführungsformen für eine Strömungssteuereinrichtung 1b sind die Auslenkelemente 4a und 4b getrennt voneinander bewegbar und die Stellung des einen Auslenkelements 4a ist nicht von der Stellung des anderen Auslenkelement 4b abhängig. In jeder Ausführungsform der Erfindung können beide Auslenkelemente 4a und 4b bei geöffnetem Strömungskanal 2 in Fließrichtung FR vor oder hinter der Zentralachse ZA angeordnet sein.

Der Strömungskanal 2 kann im Querschnitt senkrecht zu der Fließrichtung FR jede beliebige Form aufweisen. Der Strömungskanal 2 weist jedoch im Querschnitt senkrecht zu der Fließrichtung FR bevorzugt eine rechteckige, quadratische oder kreisrunde Form auf. Die Zentralachse ZA verläuft in jeder Ausführungsform bevorzugt durch eine Symmetrieachse eines senkrecht zur Fließrichtung FR verlaufenden Querschnitts durch den Strömungskanal 2.

### Bezugszeichenliste

- 1a: Strömungssteuereinrichtung zur Steuerung der Durchflussmenge gemäß dem Stand der Technik
- 1b: erfindungsgemäße Strömungssteuereinrichtung zur Steuerung der Durchflussmenge
- 2: Strömungskanal
- 2a: obere Wand
- 2b: untere Wand
- 4a bis 4d: Auslenkelemente
- 6a, 6b: Gelenke
- 8a bis 8c: Führung
- 10: Kniehebel

- I bis III: Stellung der Auslenkelemente

- A: Antrieb
- EK: Einkammerkanal
- FR: Fließrichtung
- GA: Gelenkachse
- H: Hebel
- MK: Mehrkammerkanal
- N: Nut
- P1 bis P3: Pfeile
- S: Scharnier
- W: Welle
- ZA: Zentralachse
- α1, α2, α3: Öffnungswinkel

## Patentansprüche

1. Strömungssteuereinrichtung (1 b) zur Steuerung der Durchflussmenge eines fluiden Mediums (M) durch einen Strömungskanal (2) mit mindestens zwei um eine Zentralachse (ZA) angeordneten Auslenkelementen (4a, 4b), wobei die Auslenkelemente (4a, 4b) zwischen einer ersten, den Strömungskanal (2) vollständig schließenden Stellung (I) und einer zweiten, den Strömungskanal (2) vollständig öffnenden Stellung (III) verstellbar angeordnet sind, **dadurch gekennzeichnet, daß** die Auslenkelemente (4a, 4b) separat voneinander gleichsinnig und/oder gegensinnig verstellbar angeordnet sind.

2. Strömungssteuereinrichtung nach Anspruch 1, wobei die Auslenkelemente (4a, 4b) relativ zueinander symmetrisch und/oder asymmetrisch bewegbar sind.

3. Strömungssteuereinrichtung nach Anspruch 1 oder 2, wobei die Auslenkelemente (4a, 4b) rotationssymmetrisch und/oder drehbar um die Zentralachse (ZA) herum angeordnet sind.

4. Strömungssteuereinrichtung nach einem der vorgehenden Ansprüche, wobei dem jeweiligen Auslenkelement (4a, 4b) ein Gelenk (6a, 6b) zugeordnet ist.

5. Strömungssteuereinrichtung nach Anspruch 4, wobei eines der Auslenkelemente (4a) als Gelenk (6a) ein geschlossenes Profilelement, insbesondere einen Hohl- oder Vollzylinder, aufweist.

6. Strömungssteuereinrichtung nach Anspruch 4 oder 5, wobei das andere Auslenkelement (4b) als Gelenk (6b) ein offenes Profilelement, insbesondere einen Halbzylinder, aufweist.

7. Strömungssteuereinrichtung nach Anspruch 6, wobei das als offenes Profilelement ausgebildete Gelenk (6b) das als geschlossenes Profilelement ausgebildete Gelenk (6a) zumindest teilweise umschließt.

8. Strömungssteuereinrichtung nach Anspruch 4 oder 5, wobei beide Auslenkelemente (4a, 4b) als Gelenk (6a, 6b) ein geschlossenes Profilelement, insbesondere einen Hohl- oder Vollzylinder, aufweisen, wobei die geschlossenen Profilelemente axial zueinander versetzt angeordnet sind.

9. Strömungssteuereinrichtung nach einem der vorhergehenden Ansprüche, wobei die beiden Gelenke (6a, 6b) im wesentlichen auf einer gemeinsamen Gelenkachse (GA) liegen, die insbesondere im wesentlichen mit der Zentralachse (ZA) zusammenfällt.

10. Strömungssteuereinrichtung nach einem der Ansprüche 4 bis 9, wobei das jeweilige Gelenk (6a, 6b) durch einen Kniehebel oder durch ein Filmschamier gebildet ist.

11. Strömungssteuereinrichtung nach einem der vorhergehenden Ansprüche, wobei beide Auslenkelemente (4a, 4b) in Fließrichtung (FR) des fluiden Mediums (M) gesehen mit einem variablen Öffnungswinkel (α3) von 0° bis 180° zueinander angeordnet sind.

12. Strömungssteuereinrichtung nach einem der vorhergehenden Ansprüche, wobei beide Auslenkelemente (4a, 4b) in Fließrichtung (FR) des fluiden Mediums (M) mit einem Öffnungswinkel (α3) von 0° zueinander und in ihrer Projektion auf die Normalebene überlappend vor oder hinter der Zentralachse (ZA) angeordnet sind.

13. Strömungssteuereinrichtung nach einem der vorangehenden Ansprüche, wobei die Auslenkelemente (4a, 4b) in der ersten Stellung (I) nahezu senkrecht zur Fließrichtung (FR) zueinander mit einem Öffnungswinkel (α3) von 110° bis 180°, insbesondere von 150° bis 180°, angeordnet sind.

14. Strömungssteuereinrichtung nach einem der vorhergehenden Ansprüche, wobei die Auslenkelemente (4a, 4b) Führungselemente aufweisen, die insbesondere an den jeweiligen radialen Enden der Auslenkelemente (4a, 4b) und in einer Führung (8) des Strömungskanals (2) angeordnet sind.

15. Strömungssteuereinrichtung nach einem der vorhergehenden Ansprüche, wobei der Verlauf der Zentralachse (ZA) dem Verlauf einer der Symmetrieachsen eines Querschnitts des Strömungskanals (2) entspricht.

16. Strömungssteuereinrichtung nach einem der vorhergehenden Ansprüche, wobei die Gelenkachse (GA) und/oder die Zentralachse (ZA) während einer Verstellung der Auslenkelemente (4a, 4b) relativ zum Strömungskanal (2) und/oder relativ zueinander fixiert sind.

17. Strömungssteuereinrichtung nach einem der vorhergehenden Ansprüche, wobei die Gelenkachse (GA) und/oder die Zentralachse (ZA) während einer Verstellung der Auslenkelemente (4a, 4b) relativ zum Strömungskanal (2) und/oder relativ zueinander verschiebbar angeordnet sind.

18. Strömungskanal (2), insbesondere Strukturbauteil eines Kraftfahrzeugs, mit einer Strömungssteuereinrichtung (1 b) nach einem der Ansprüche 1 bis 17.

19. Strömungskanal nach Anspruch 18, **dadurch gekennzeichnet, dass** in Fließrichtung (FR) vor der Strömungssteuereinrichtung (1 b) ein Mehrkammerkanal (MK) und in Fließrichtung (FR) hinter der Strömungssteuereinrichtung (1b) ein Einkammerkanal (EK) gebildet ist oder umgekehrt.

20. Klimaanlage, insbesondere für ein Kraftfahrzeug, mit zumindest einem Luftzuführungselement, wie Gebläse, mit zumindest einem Wärmetauscher, mit zumindest einem Strömungskanal und mit zumindest einer Strömungssteuereinrichtung nach einem der Ansprüche 1 bis 17.

## Claims

1. A flow controlling device (1b) for controlling the amount of fluid (M) flowing through a duct (2) having at least two deflection elements (4a, 4b) positioned around a central axis (ZA), the deflection elements (4a, 4b) being positioned in such a manner that they can be adjusted between a first position (I) completely closing the duct (2) and a second position (III) completely opening the duct (2),
**characterised in that**
the deflection elements (4a, 4b) are positioned in such manner that they can be adjusted independently in the same direction or in different directions.

2. A flow controlling device in accordance with claim 1,
it being possible to move the deflection elements (4a, 4b) symmetrically and/or asymmetrically in relation to one another.

3. A flow controlling device in accordance with claim 1 or 2,
the deflection elements (4a, 4b) being positioned around the central axis (ZA) rotationally symmetrically and/or in such a manner that they are able to rotate.

4. A flow controlling device in accordance with one of the preceding claims,
a joint (6a, 6b) being assigned to each deflection elements (4a, 4b).

5. A flow controlling device in accordance with claim 4,
one of the deflection elements (4a) having as its joint (6a) a closed profiled element, in particular a hollow or solid cylinder.

6. A flow controlling device in accordance with claim 4 or 5,
the other deflection element (4b) having as its joint (6b) a closed profiled element, in particular a half cylinder.

7. A flow controlling device in accordance with claim 6,
the joint (6b) designed as an open profiled element enclosing the joint (6a) designed as a closed profiled element at least partially.

8. A flow controlling device in accordance with claim 4 or 5,
both deflection elements (4a, 4b) having as their joint (6a, 6b) a closed profiled element, in particular a hollow or solid cylinder, the closed profiled elements being positioned axially offset in relation to one another.

9. A flow controlling device in accordance with one of the preceding claims,
the two joints (6a, 6b) lying essentially on a common joint axis (GA) which in particular coincides essentially with the central axis (ZA).

10. A flow controlling device in accordance with one of claims 4 to 9,
each joint (6a, 6b) taking the form of a toggle lever or a sprocket hinge.

11. A flow controlling device in accordance with one of the preceding claims,
the two deflection elements (4a, 4b) being positioned at a variable opening angle (α3) of 0° to 180° in relation to one another when viewed in the direction of flow (FR) of the fluid (M).

12. A flow controlling device in accordance with one of the preceding claims,
the two deflection elements (4a, 4b) being positioned at a variable opening angle (α3) of 0° in relation to one another when viewed in the direction of flow (FR) of the fluid (M) and overlapping in front of or behind the central axis (ZA) when projected onto the normal plane.

13. A flow controlling device in accordance with one of the preceding claims,
the deflection elements (4a, 4b) being positioned at a variable opening angle (α3) of 110° to 180°, in particular 150° to 180°, in relation to one another almost perpendicular to the direction of flow (FR) of the fluid (M) in the first position (I).

14. A flow controlling device in accordance with one of the preceding claims,
the deflection elements (4a, 4b) having guide elements which are in particular positioned on the radial ends of the deflection elements (4a, 4b) and in a guide (8) in the duct (2).

15. A flow controlling device in accordance with one of the preceding claims,
the course of the central axis (ZA) corresponding to the course of one of the axes of symmetry of a cross-section of the duct (2).

16. A flow controlling device in accordance with one of the preceding claims,
the joint axis (GA) and/or the central axis (ZA) being fixed in relation to the duct (2) and/or in relation to one another during adjustment of the deflection elements (4a, 4b).

17. A flow controlling device in accordance with one of the preceding claims,
it being possible to move the joint axis (GA) and/or the central axis (ZA) in relation to the duct and/or in relation to one another during adjustment of the deflection elements (4a, 4b).

18. A duct (2), in particular a structural component of a motor vehicle, having a flow controlling device (1b) in accordance with one of claims 1 to 17.

19. A duct in accordance with claim 18,
**characterised in that**
a multi-chamber duct (MK) is formed upstream of the flow controlling device (1b) in the direction of flow (FR) and a single-chamber duct (EK) is formed downstream of the flow controlling device (1b) in the direction of flow, or vice versa.

20. An air conditioning system, in particular for a motor vehicle, having at least one air supply element such as a fan, having at least one heat exchanger, having at least one duct and having at least one flow controlling device in accordance with one of claims 1 to 17.

## Revendications

1. Dispositif de commande d'écoulement (1b) pour commander le débit d'un milieu fluide (M) dans un canal d'écoulement (2), comprenant au moins deux éléments de déviation (4a, 4b) disposés autour d'un axe central (ZA), les éléments de déviation (4a, 4b) étant disposés de façon réglable entre une première position (I) fermant complètement le canal d'écoulement (2) et une deuxième position (III) ouvrant complètement le canal d'écoulement (2), **caractérisé en ce que** les éléments de déviation (4a, 4b) sont disposés de façon réglable dans le même sens et/ou dans le sens opposé séparément l'un de l'autre.

2. Dispositif de commande d'écoulement selon la revendication 1, dans lequel les éléments de déviation (4a, 4b) sont mobiles de façon symétrique et/ou asymétrique l'un par rapport à l'autre.

3. Dispositif de commande d'écoulement selon la revendication 1 ou 2, dans lequel les éléments de déviation (4a, 4b) sont disposés à symétrie de rotation et/ou pivotant autour de l' axe central (ZA).

4. Dispositif de commande d'écoulement selon l'une quelconque des revendications précédentes, dans lequel une articulation (6a, 6b) est associée à chaque élément de déviation (4a, 4b).

5. Dispositif de commande d'écoulement selon la revendication 4, dans lequel l'un des éléments de déviation (4a) présente comme articulation (6a) un élément profilé fermé, en particulier un cylindre creux ou plein.

6. Dispositif de commande d'écoulement selon la revendication 4 ou 5, dans lequel l'autre élément de déviation (4b) présente comme articulation (6b) un élément profilé ouvert, en particulier un demi-cylindre.

7. Dispositif de commande d'écoulement selon la revendication 6, dans lequel l'articulation (6b) en forme d'élément profilé ouvert entoure au moins partiellement l'articulation (6a) en forme d'élément profilé fermé.

8. Dispositif de commande d'écoulement selon la revendication 4 ou 5, dans lequel les deux éléments de déviation (4a, 4b) présentent comme articulation (6a, 6b) un élément profilé fermé, en particulier un cylindre creux ou plein, les éléments profilés fermés étant disposés de façon axialement décalée l'un par rapport à l'autre.

9. Dispositif de commande d'écoulement selon l'une quelconque des revendications précédentes, dans lequel les deux articulations (6a, 6b) se situent pour l'essentiel sur un axe d'articulation (GA) commun qui coïncide en particulier pour l'essentiel avec l'axe central (ZA).

10. Dispositif de commande d'écoulement selon l'une quelconque des revendications 4 à 9, dans lequel l'articulation (6a, 6b) respective est composée d'une genouillère ou d'une charnière pelliculaire.

11. Dispositif de commande d'écoulement selon l'une quelconque des revendications précédentes, dans lequel les deux éléments de déviation (4a, 4b), observés dans la direction du flux (FR) du milieu fluide (M), sont disposés à un angle d'ouverture (α3) variable de 0° à 180° l'un par rapport à l'autre.

12. Dispositif de commande d'écoulement selon l'une quelconque des revendications précédentes, dans lequel les deux éléments de déviation (4a, 4b), dans la direction du flux (FR) du milieu fluide (M), sont disposés à un angle d'ouverture (α3) de 0° l'un par rapport à l'autre et, dans leur projection sur le plan normal, se chevauchent en amont ou en aval de l'axe central (ZA).

13. Dispositif de commande d'écoulement selon l'une quelconque des revendications précédentes, dans lequel les éléments de déviation (4a, 4b) sont disposés dans la première position (I) à peu près perpendiculairement à la direction du flux (FR) l'un par rapport à l'autre à un angle d'ouverture (α3) allant de 110° à 180°, en particulier de 150° à 180°.

14. Dispositif de commande d'écoulement selon l'une quelconque des revendications précédentes, dans lequel les éléments de déviation (4a, 4b) présentent des éléments de guidage qui sont disposés en particulier sur les extrémités radiales respectives des éléments de déviation (4a, 4b) et dans un guidage (8) du canal d'écoulement (2).

15. Dispositif de commande d'écoulement selon l'une quelconque des revendications précédentes, dans lequel l'évolution de l'axe central (ZA) correspond à l'évolution d'un des axes de symétrie d'une section transversale du canal d'écoulement (2) .

16. Dispositif de commande d'écoulement selon l'une quelconque des revendications précédentes, dans lequel l'axe d'articulation (GA) et/ou l'axe central (ZA) sont fixés par rapport au canal d'écoulement (2) et/ou l'un par rapport à l'autre pendant un réglage des éléments de déviation (4a, 4b).

17. Dispositif de commande d'écoulement selon l'une quelconque des revendications précédentes, dans lequel l'axe d'articulation (GA) et/ou l'axe central (ZA) peuvent être déplacés par rapport au canal d'écoulement (2) ou l'un par rapport à l'autre pendant un réglage des éléments de déviation (4a, 4b).

18. Canal d'écoulement (2), en particulier composant structurel d'un véhicule automobile, comprenant un dispositif de commande d'écoulement (1b) selon l'une des revendications 1 à 17.

19. Canal d'écoulement selon la revendication 18, **caractérisé en ce que**, dans la direction du flux (FR) en amont du dispositif de commande d'écoulement (1b), un canal à chambres multiples (MK) et, dans la direction du flux (FR) en aval du dispositif de commande d'écoulement (1b), un canal à chambre unique (EK) sont formés ou inversement.

20. Installation de climatisation, en particulier pour un véhicule automobile, comprenant au moins un élément d'alimentation en air, tel qu'un ventilateur, au moins un échangeur thermique, au moins un canal d'écoulement et au moins un dispositif de commande d'écoulement selon l'une des revendications 1 à 17.
